# EUROPÄISCHE PATENTSCHRIFT

(11) **EP 1 940 852 B1**
(45) Veröffentlichungstag und Bekanntmachung des Hinweises auf die Patenterteilung: **03.03.2010**
(21) Anmeldenummer: 06807257.8
(22) Anmeldetag: 13.10.2006
(51) Int. Cl.: C07F 7/14, C07F 7/08, C08G 77/06, C08G 77/38

(54) **VERFAHREN ZUR HYDROSILYLIERUNG**
PROCESS FOR HYDROSILYLATION
PROCEDE DE HYDROSILYLATION

(30) Priorität: 27.10.2005 DE 102005051578
(43) Veröffentlichungstag der Anmeldung: 09.07.2008
(73) Patentinhaber: Wacker Chemie AG, 81737 München (DE)
(72) Erfinder: GEISBERGER, Gilbert, 84503 Altötting (DE); BAUMANN, Frank, 84529 Tittmoning (DE)
(74) Vertreter: Fritz, Helmut
(86) Internationale Anmeldenummer: PCT/EP2006/067394
(87) Internationale Veröffentlichungsnummer: WO 2007/048716

(56) Entgegenhaltungen:
- WO-A-2005/058919
- GB-A- 2 035 348
- US-A- 3 950 364
- US-A- 4 898 961
- US-B1- 6 706 840
- US-B2- 6 803 440

## Beschreibung

Gegenstand der Erfindung ist ein Verfahren zur Hydrosilylierung von H-Silanen und lineare, cyclische oder verzweigten H-Siloxanen mit Kohlenstoff-Kohlenstoff-Doppel- bzw. Kohlenstoff-Kohlenstoff-Dreifachbindungen enthaltenden Verbindungen unter Katalyse mit Edelmetall, **dadurch gekennzeichnet, dass** zur Verbesserung der katalytischen Aktivität der Wassergehalt der Reaktionsmischung 0,05 bis 500 ppm beträgt und der Katalysator flüssig zur Reaktionsmischung zugegeben wird.

A. Behr et al. in Chemie Ingenieur Technik (1999), 71 (5), 490-493 beschreiben die Hydrosilylierung von Alkoxysilan mit wasserfreier Hexachloroplatinsäure. Der verwendete Katalysator wurde dabei im Hochvakuum bei 260°C getrocknet. Nachteilig wirkt sich dabei die Dosierung eines festen Katalysators aus, da dies einen hohen technischen Aufwand an die Prozessführung und Dosiergenauigkeit stellt. Die verwendete Trocknungsmethode ist zudem unwirtschaftlich und großtechnisch unpraktikabel. Das beschriebene Verfahren arbeitet weiterhin mit sehr hohen Platinkonzentrationen, wobei die niedrigste Platinkonzentration 50 ppm beträgt. Der getrocknete Katalysator ist ein hygroskopischer Feststoff, wodurch sich die Lagerung und Handhabung in technischen Prozessen schwierig gestaltet.

Das europäische Patent EP 0 693 492 B1 beschreibt die Hydrosilylierung von Dimethylchlorsilan (HM2) mit Allylmethacrylat in Gegenwart eines Edelmetallkatalysators ausgewählt aus Verbindungen oder Metalle der VIII. Nebengruppe des Periodensystems, wobei der Wassergehalt im Allylmethacrylat maximal 200 ppm beträgt. Das Allylmethacrylat wird mittels eines Molekularsiebs oder durch azeotrope Destillation mit einem wasserunmischbaren Lösungsmittel getrocknet. Das resultierende Methacryloxypropyldimethylchlorsilan wird mittels Destillation in Gegenwart eines Polymerisationsinhibitors aufgereinigt. Das Verfahren zeichnet sich durch eine geringen Anteil des unerwünschten Nebenprodukts α-Methylpropionyloxypropyldimethylchlorsilan sowie die Verminderung der Gelierung während der abschließenden Destillation.

L. Lestel in Polymer Preprints (1989), 30 (1), 133-134 offenbaren die Hydrosilylierung von Polydimethylsiloxan mit Diallyl-terminierten Polyethylenoxid in Gegenwart von Platinhaltigen Katalysatoren ausgewählt aus der Gruppe bestehend aus getrocknetem H2PtC16-Pulver, Hexachlorplatinsäure gelöst in 1-Octanol und 1,2-Divinyl-1,1,2,2-tetramethyldisiloxanplatinkomplex gelöst in Xylol. Bei der Herstellung von aus den beschriebenen Blockcopolymeren bestehenden Membranen wird die Blasenbildung durch entstehenden Wasserstoff auf die Gegenwart von Wasserspuren zurückgeführt. Dies wird anhand der Reaktion von Pentamethyldisiloxan mit Wasser unter Wasserstoffabspaltung zum Silanol, welches selbst unter Freisetzung von Wasser weiter zum Decamethyltetrasiloxan reagiert, belegt.

Die internationale Patentanmeldung WO2004/56907 A2 beschreibt hydrophile Siloxancopolymere, hergestellt mittels Hydrosilylierung von Organopolysiloxanen, die pro Molekül mindestens ein Silicium gebundenes Wasserstoffatom aufweisen, mit Alkenylpolyethern und anschließender Umsetzung mit Diisocyanaten, mit der Maßgabe, dass der Wassergehalt der Rohstoffe Organopolysiloxan und Alkenylpolyether kleiner 2000 ppm ist. Der Wassergehalt wird aufgrund der Nebenreaktion des Wassers mit den Diisocyanaten unterhalb von 2000 ppm gehalten, um die Schaumbildung im zweiten Reaktionsschritt zu unterdrücken.

Das deutsche Patent DE 101 33 008 C1 offenbart ein Verfahren zur Anlagerung von an silicium gebundenem Wasserstoff an aliphatische Kohlenstoff-Kohlenstoff-Mehrfachbindungen in Anwesenheit von Platin-haltigen Katalysatoren, bei dem durch Zusatz von Persäuren die katalytische Aktivität des Platinkatalysators erhalten bzw. gesteigert wird. Durch ihre oxidierende Wirkung können diese in der kontinuierlichen und diskontinuierlichen Hydrosilylierung einen inhibierten Zustand des Katalysators Platin reaktivieren und als Coaktivator bzw. Cokatalysator wirken. Der Nachteil dieses Verfahrens ist die zusätzliche Zugabe eines Additivs, um die katalytische Aktivität zu erhalten.

Aufgabe der vorliegenden Erfindung war daher, ein großtechnisch verwendbares Verfahren zur Hydrosilylierung von Silicium gebundenen Wasserstoff an Kohlenstoff-Kohlenstoff-Mehrfachbindungen zur Verfügung zu stellen, das eine einfache Zugabe des eingesetzten Edelmetallkatalysators ermöglicht und ohne Zusatz weiterer Hilfsstoffe eine gleich bleibend hohe oder höhere Aktivität des Katalysators gewährleistet.

Die dieser Erfindung zugrunde liegende Aufgabe wurde nun überraschend gelöst, dass der Wassergehalt der Hydrosilylierungszusammensetzung von 0,05 bis 500 ppm gehalten wird und der Katalysator in flüssiger Form zudosiert wird.

Gegenstand der Erfindung ist daher ein Verfahren zur Hydrosilylierung von Kohlenstoff-Kohlenstoff-Doppel- bzw. Kohlenstoff-Kohlenstoff-Dreifachbindungen enthaltenden Verbindungen (A) mit Organosiliciumverbindungen mit an Silicium gebundenen Wasserstoff (B) mittels einer Verbindung oder eines Komplexes eines Edelmetalls der VIII. Nebengruppe als Katalysator (C), **dadurch gekennzeichnet, dass** zur Verbesserung der katalytischen Aktivität der Wassergehalt der Reaktionsmischung maximal 1000 ppm beträgt und der Katalysator flüssig zur Reaktionsmischung zugegeben wird, mit der Maßgabe, dass die Edelmetallkonzentration maximal 50 ppm, vorzugsweise 25 ppm bezogen auf die gesamte Reaktionszusammensetzung beträgt.

Der Wassergehalt in der Reaktionsmischung des erfindungsgemäßen Verfahrens beträgt 0,05 bis 500 ppm, besonders bevorzugt 0,1 bis 100 ppm.

Durch die flüssige Dosierung des Katalysators und dem Wassergehalt von 0,05 bis 500 ppm in der Reaktionsmischung ergibt sich eine höhere katalytische Aktivität und dadurch wird ein geringerer Edelmetall-Einsatz notwendig. Gleichzeitig resultieren kürzere Anlagenbelegzeiten. Die Flüssigdosierung ist technisch besonders einfach zu realisieren und sehr präzise. Daher ergibt sich eine sicherere Prozessführung, da weniger Schwankungen bei der exothermen Reaktion auftreten.

Bei der erfindungsgemäß eingesetzten Verbindung (A) kann es sich um siliciumfreie organische Verbindungen mit aliphatisch ungesättigten Gruppen sowie um Organosiliciumverbindungen mit aliphatisch ungesättigten Gruppen handeln.

Beispiele für organische Verbindungen, die im erfindungsgemäßen Verfahren als Komponente (A) eingesetzt werden können, sind alle Arten von Olefinen, wie 1-Alkene, 1-Alkine, Vinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Cyclopenten, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinylhexadien-(1,5) und 4,5-Dimethyl-4,5-diethyl-octadien-(1,7), Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Allylalkohole, Allylglykole, Allylglycidether und Allylbernsteinsäureanhydrid.

Prinzipiell ist das erfindungsgemäße Verfahren auch zur Umsetzung von Acrylaten, wie beispieslweise N,N'-Methylen-bis-(acrylsäureamid), 1,1,1-Tris(hydroxymethyl)-propantriacrylat, 1,1,1-Tris(hydroxymethyl)-propan-trimethacrylat, Tripropylenglykol-diacrylat, Polyethylenglykol Diacrylat, Polyethylenglykol Dimethacrylat oder Poly-(propylenglykol)methacrylat, geeignet.

Des weiteren können bei dem erfindungsgemäßen Verfahren als Bestandteil (A) aliphatisch ungesättigte Organosiliciumverbindungen eingesetzt werden.

Falls als Bestandteil (A) Organosiliciumverbindungen eingesetzt werden, die SiC-gebundene Reste mit aliphatischen Kohlenstoff-Kohlenstoff-Mehrfachbindungen aufweisen, handelt es sich vorzugsweise um solche aus Einheiten der Formel

RₐR¹_{b}SiO_{(4-a-b)/2} (I),

worin
- **R**: gleich oder verschieden sein kann und einen von aliphatischen Kohlenstoff-Kohlenstoff-Mehrfachbindungen freien, organischen Rest bedeutet,
- **R¹**: gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
- **a**: 0, 1, 2 oder 3 ist und
- **b**: 0, 1 oder 2 ist
mit der Maßgabe, dass die Summe a + b ≤ 4 ist.

Bei den erfindungsgemäß eingesetzten Organosiliciumverbindungen (A) kann es sich sowohl um Silane handeln, d.h. Verbindungen der Formel (I) mit a + b = 4, als auch um Siloxane, d.h. Verbindungen enthaltend Einheiten der Formel (I) mit a + b ≤ 3.

Rest **R** umfasst die einwertigen Reste -F, -Cl, -Br, -CN, -SCN, -NCO, Alkoxyreste und SiC-gebundene, gegebenenfalls substituierte Kohlenwasserstoffreste, die mit Sauerstoffatomen oder der Gruppe -C(O)- unterbrochen sein können.

Beispiele für Reste **R** sind Alkylreste, wie beispielsweise der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie beispielsweise der n-Hexylrest, Heptylreste, wie beispielsweise der n-Heptylrest, Octylreste, wie beispielsweise der n-Octylrest und iso-Octylreste, wie beispielsweise der 2,2,4-Trimethylpentylrest, Nonylreste, wie beispielsweise der n-Nonylrest, Decylreste, wie beispielsweise der n-Decylrest, Dodecylreste, wie beispielsweise der n-Dodecylrest, und Octadecylreste, wie beispielsweise der n-Octadecylrest, Cycloalkylreste, wie beispielsweise Cyclopentyl-, Cyclohexyl-, Cycloheptyl- und Methylcyclohexylreste, Arylreste, wie beispielsweise der Phenyl-, Naphthyl-, Anthryl- und Phenanthrylrest, Alkarylreste, wie beispielsweise o-, m-, p-Tolylreste, Xylylreste und Ethylphenylreste, und Aralkylreste, wie beispielsweise der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R¹** kann es sich um beliebige, einer Anlagerungsreaktion (Hydrosilylierung) mit einer SiH-funktionellen Verbindung zugängliche Gruppen handeln.

Falls es sich bei Rest **R¹** um SiC-gebundene, substituierte Kohlenwasserstoffreste handelt, sind als Substituenten Halogenatome, Cyanoreste, Alkoxygruppen und Siloxygruppen bevorzugt.

Bevorzugt handelt es sich bei Rest **R¹** um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cycl-opentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Bevorzugt als Komponente (A) sind alle endständigen Olefine und alle allylhaltigen, vinylhaltigen und alkinhaltigen Systeme, wobei allylhaltige Systeme besonders bevorzugt sind.

Als Organosiliciumverbindung (B) können alle hydrogenfunktionellen Organosiliciumverbindungen eingesetzt werden, die auch bisher bei Hydrosilylierungsreaktionen eingesetzt worden sind.

Als Organosiliciumverbindungen (B), die Si-gebundene Wasserstoffatome aufweisen, werden vorzugsweise solche eingesetzt, die Einheiten der Formel

R²_{c}H_{d}SiO_{(4-c-d)/2} (II)

enthalten, worin
- **R²**: gleich oder verschieden sein kann und die oben für R angegebene Bedeutung hat,
- **c**: 0, 1, 2 oder 3 ist und
- **d**: 0, 1 oder 2 ist,
mit der Maßgabe, dass die Summe von c + d ≤ 4 ist und mindestens ein Si-gebundenes Wasserstoffatom je Molekül vorliegt.

Bevorzugt sind Reste **R²** ausgewählt aus der Gruppe enthaltend die einwertigen Reste -F, -Cl, -Br, -CN, -SCN, -NCO und SiC-gebundene, gegebenenfalls substituierte Kohlenwasserstoffreste, wie beispielsweise Alkylreste, wie beispielsweise der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie beispielsweise der n-Hexylrest, Heptylreste, wie beispielsweise der n-Heptylrest, Octylreste, wie beispielsweise der n-Octylrest und iso-Octylreste, wie beispielsweise der 2,2,4-Trimethylpentylrest, Nonylreste, wie beispielsweise der n-Nonylrest, Decylreste, wie beispielsweise der n-Decylrest, Dodecylreste, wie beispielsweise der n-Dodecylrest, und Octadecylreste, wie beispielsweise der n-Octadecylrest, Cycloalkylreste, wie beispielsweise Cyclopentyl-, Cyclohexyl-, Cycloheptyl- und Methylcyclohexylreste, Arylreste, wie beispielsweise der Phenyl-, Naphthyl-, Anthryl- und Phenanthrylrest, Alkarylreste, wie beispielsweise o-, m-, p-Tolylreste, Xylylreste und Ethylphenylreste, und Aralkylreste, wie beispielsweise der Benzylrest, der α- und der β-Phenylethylrest.

Bei den erfindungsgemäß eingesetzten Organosiliciumverbindungen (B) kann es sich sowohl um Silane handeln, d.h. Verbindungen der Formel (II) mit c+d=4, als auch um Siloxane, d.h. Verbindungen enthaltend Einheiten der Formel (II) mit c+d≤3. Vorzugsweise handelt es sich bei den erfindungsgemäß eingesetzten Organosiliciumverbindungen um Organopolysiloxane, insbesondere um solche, die aus Einheiten der Formel (II) bestehen.

Vorzugsweise enthält die erfindungsgemäß eingesetzte Organosiliciumverbindung (B) Si-gebundenen Wasserstoff im Bereich von 0,02 bis 1,7 Gewichtsprozent, bezogen auf das Gesamtgewicht der Organosiliciumverbindung (B).

Das Molekulargewicht des Bestandteils (B) im Falle von Siloxan kann in weiten Grenzen variieren, etwa zwischen 10**²** und 10**⁶** g/mol. So kann es sich bei dem Bestandteil (B) beispielsweise um ein relativ niedermolekulares SiHfunktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein.

Bei dem erfindungsgemäßen Verfahren wird Bestandteil (B) vorzugsweise in einer solchen Menge eingesetzt, dass das Molverhältnis von aliphatisch ungesättigten Gruppen des Bestandteils (A) zu SiH-Gruppen des Bestandteils (B) zwischen 0,1 und 20 und bei Siloxanen bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Bei dem erfindungsgemäßen Verfahren können als Komponente (C) alle Katalysatoren eingesetzt werden, die auch bisher zur Addition von Si-gebundenen Wasserstoff an aliphatisch ungesättigte Verbindungen eingesetzt wurden. Beispiele für solche Katalysatoren sind Verbindungen oder Komplexe der Gruppe der Edelmetalle enthaltend Platin, Ruthetium, Iridium, Rhodium und Palladium, wie beispielsweise Platinhalogenide, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxidethylenplatin-(II)-dichlorid sowie Umsetzungsprodukte von Platintetrachlorid mit Olefin und primärem Amin oder sekundärem Amin oder primärem und sekundärem Amin, wie beispielsweise das Umsetzungsprodukt aus in 1-Octen gelöstem Platintetrachlorid mit sec.-Butylamin. In einer weiterhin bevorzugten Ausführungsform des erfindungsgemäßen Verfahrens werden Komplexe des Iridiums mit Cyclooctadiene, wie beispielsweise µ-Dichloro-bis(cyclooctadiene)-diiridium(I), verwendet.

Vorzugsweise handelt es sich bei dem Katalysator (C) um Verbindungen oder Komplexe des Platins, bevorzugt um Platinchloride und Platinkomplexe, insbesondere um Platin-Olefin-Komplexe und besonders bevorzugt um Platin-Divinyltetramethyldisiloxankomplexe.

Bei dem erfindungsgemäßen Verfahren wird Katalysator (C) in Mengen von maximal 25 Gewichts-ppm bezogen auf das Gesamtgewicht der in den Massen vorliegenden Komponente (A) und (B), eingesetzt. Bevorzugt werden 5 bis 25 Gewichts-ppm eingesetzt.

In einer ebenfalls bevorzugten Ausführungsform werden Silane der allgemeinen Formel (III)

R³ₑH_{f}Si (III)

umgesetzt, worin
- **R³**: gleich oder verschieden sein kann und die oben für R angegebene Bedeutung hat,
- **e**: 1, 2 oder 3 ist und
- **f**: 1, 2 oder 3 ist,
mit der Maßgabe, dass die Summe von e + f = 4 ist.

Beispiele für Reste **R³** sind insbesondere -F, -Cl, -Br, -CN, -SCN, -NCO und die für Rest R angegebenen, SiC-gebundenen, gegebenenfalls substituierte Alkyl- und Arylreste sowie mit Halogenatomen substituierte Arylreste, wobei Methyl-, Propyl-, Phenyl- und halogenierte Phenylreste bevorzugt und der Methylrest und halogenierte Phenylreste besonders bevorzugt sind.

Das erfindungsgemäße Verfahren kann in Anwesenheit oder Abwesenheit von organischem Lösungsmittel (D) durchgeführt werden.

Beispiele für organische Lösungsmittel (D) sind alle Lösungsmittel, die auch bisher bei Hydrosilylierungsreaktionen eingesetzt werden konnten, wie Toluol, Xylol, Isopropanol, Aceton, Isophoron und Glykole.

Falls organische Lösungsmittel (D) eingesetzt werden, handelt es sich bevorzugt um Toluol, Isopropanol und Glykole sowie besonders bevorzugt um Toluol.

Falls beim erfindungsgemäßen Verfahren organische Lösungsmittel (D) eingesetzt werden, handelt es sich um Mengen von bevorzugt 5 bis 60 Gewichts-%, besonders bevorzugt 5 bis 40 Gewichts-%, jeweils bezogen auf das Gesamtgewicht der Reaktionsmischung.

Bei dem erfindungsgemäßen Verfahren können außer den Komponenten (A) bis (D) noch alle weiteren Stoffe (E) eingesetzt werden, die auch bisher bei Hydrosilylierungsreaktionen eingesetzt wurden.

Vorzugsweise werden bei dem erfindungsgemäßen Verfahren zusätzlich zu Komponenten (A) bis (E) keine weiteren Stoffe eingesetzt.

Bei den erfindungsgemäß eingesetzten Komponenten (A) bis (E) kann es sich jeweils um eine einzelne Art einer solchen Komponente, wie auch um ein Gemisch aus mindestens zwei verschiedenen Arten einer solchen Komponente handeln.

Bei dem erfindungsgemäßen Verfahren können die eingesetzten Komponenten nach beliebigen und bekannten Verfahren miteinander vermischt werden. Vorzugsweise werden bei dem erfindungsgemäßen Verfahren entweder alle Reagentien bis auf Katalysator (C) vorgelegt und anschließend die Umsetzung durch Katalysatorzugabe gestartet oder es werden alle Reagentien bis auf die Si-H-haltigen Verbindungen (B) vorgelegt und die Si-H-haltigen Verbindungen anschließend zudosiert.

Das erfindungsgemäße Verfahren kann kontinuierlich oder diskontinuierlich durchgeführt werden.

Bei dem erfindungsgemäßen Verfahren kann die Anlagerung von Si-gebundenem Wasserstoff an aliphatische Mehrfachbindung unter den gleichen Bedingungen erfolgen, wie in den bisher bekannten Hydrosilylierungsreaktionen. Vorzugsweise handelt es sich dabei um Temperaturen von 20 bis 200°C, besonders bevorzugt von 60 bis 140°C, und einem Druck von 1 bis 20 bar. Es können aber auch höhere oder niedrigere Temperaturen und Drücke angewendet werden.

Die bei dem erfindungsgemäßen Verfahren hergestellten Organosiliciumverbindungen können für alle Zwecke eingesetzt werden, für die auch bisher modifizierte Organosiliciumverbindungen verwendet wurden.

Das erfindungsgemäße Verfahren hat den Vorteil, dass eine deutliche Katalysatorreduktion erreicht werden kann, da die katalytische Aktivität des ursprünglichen Katalysators deutlich erhöht und verlängert werden kann.

Des weiteren hat das erfindungsgemäße Verfahren den Vorteil, dass durch eine Katalysatorreduktion auch sekundäre Effekte erreicht werden können, wie verbesserte Farbqualitäten und geringerer Anteil an toxischen Schwermetallen im Hydrosilylierungsprodukt insbesondere bei Polysiloxanen.

Der Wassergehalt von 0,05 bis 500 ppm in der Reaktionsmischung kann durch das Vorbehandeln der eingesetzten Ausgangsverbindungen und des Katalysator, beispielsweise mit einem geeigneten Trocknungsmittel, erreicht werden.

Beispiele für geeignete Trocknungsmittel sind Calciumchlorid, Magnesiumsulfat, Natriumsulfat, Metalle oder Molekularsieb. Ungeeignet für die H-Siloxane sind beispielsweise Kaliumhydroxid, Natriumhydroxid oder saure Tonerde, die zur Reaktion mit SiH oder Äquilibrierungsreaktionen führen. Besonders bevorzugt bei H-haltigen Chlorsilanen ist das Vorabmischen des Katalysators in H-freien Chlorsilan als Trocknungsmittel, wie beispielsweise Siliciumtetrachlorid.

Als Maß für die katalytische Aktivität kann die Zeit bis zum exothermen Temperatursprung nach Reaktionsstart der Hydrosilylierung betrachtet werden. Hierzu werden die SiHhaltige und olefinische Komponente gemischt und nach Zugabe des Katalysators die einsetzende Temperaturerhöhung verfolgt.

Ein weiteres Maß für die katalytische Aktivität ist bei nicht homogen Start-Mischungen die Zeitdauer bis beispielsweise bei Polyether/Silicon-Mischungen eine klare Mischung vorliegt.

### Beispiele

### 1.) Chlorsilan

A) Vergleichsbeispiel ohne "Trocknung" (nicht erfindungsgemäß) In einem 100 ml Glaskolben werden 29 g(0,13 mol) Hexadecen bei Raumtemperatur vorgelegt und mit 19,0 g ( 0,14 mol) Trichlorsilan vermischt. Die Reaktionsmischung wird mit 0,05 g einer Platinkatalysatorlösung (4 Gew.% Platin) in Dodecen versetzt. Die Reaktionsmischung zeigt nach ca. 5 Minuten einen starken Temperaturanstieg und erreicht nach 12 Minuten das Temperaturmaximum. Die Reaktion ist nach 15 Minuten abgeschlossen.

### B) Erfindungsgemäßes Beispiel

Trocknung: 10 g einer platinhaltigen Katalysatorlösung werden mit 2 Gew-% Tetrachlorsilan bei Raumtemperatur versetzt und für 15 Minuten gerührt.
In einem 100 ml Glaskolben werden 29 g(0,13 mol) Hexadecen bei Raumtemperatur vorgelegt und mit 19,0 g ( 0,14 mol) Trichlorsilan vermischt. Die Reaktionsmischung wird mit 0,05 g einer getrockneten Platinkatalysatorlösung (4 Gew.% Platin) in Dodecen versetzt. Die Reaktionsmischung zeigt nach ca. 3 Minuten einen starken Temperaturanstieg und erreicht nach 8 Minuten das Temperaturmaximum. Die Reaktion ist nach 10 Minuten abgeschlossen.

### 2.) Glykolfunktionelles Siliconöl

A) Vergleichsbeispiel Hydrosilylierung mit > 1000 ppm H2O in der Reaktionsmischung (nicht erfindungsgemäß)

800 g eines α,ω-Dihydrogenpolydimethylsiloxans mit 0,055 Gew.-% Si-gebundenem Wasserstoff und einem Wassergehalt von 55 Gew.-ppm werden mit 1407 g eines Allylalkoholethoxylat/propyloxylats der Formel

H₂C=CH-CH₂-(OCH₂CH₂)ₐ[OCH₂CH(CH₃)]_{b}-OH ,

mit einem Verhältnis a : b = 1,0, einem Wassergehalt von 1619 Gew.-ppm und einer Jodzahl von 14,3 (als Jodzahl wird die Zahl bezeichnet, welche die bei der Addition an die aliphatische Mehrfachbindung verbrauchte Jodmenge in Gramm pro 100 Gramm eingesetztes, zu untersuchendes Material angibt) vermischt.

Das Reaktionsgemisch wird auf 95°C erhitzt und bei Reaktionstemperatur mit 2,20 g einer 1,25%igen Lösung von Hexachloroplatinsäure in Dimethoxyethan versetzt.
Das Reaktionsgemisch erwärmt sich um 6°C und wird 15 min nach Reaktionsstart homogen.

### B) Erfindungsgemäßes Beispiel

Vorhergehendes Beispiel wird wiederholt, indem aber zum Vergleich ein Polyether eingesetzt wird, der zuvor im Hochvakuum 2 Stunden bei 100°C getrocknet wurde. Der Wassergehalt des Polyethers beträgt dadurch 127 Gew.-ppm.

Das Reaktionsgemisch erwärmt sich um 8°C und wird bereits 12 min nach Reaktionsstart homogen.

### 3.) Carbinolfunktionelles Siliconöl

### A) Vergleichsbeispiel Hydrosilylierung mit > 1000 ppm H2O in der Reaktionsmischung (nicht erfindungsgemäß)

100 g Allylalkohol, 113 ml Toluol und 1 g Natriumcarbonat wasserfrei werden in einem Dreihalskolben vorgelegt und auf 90°C erwärmt. Nach Zugabe von 2,0 ml der Platin-Katalysatorlösung (1,25%ige Lösung von Hexachloroplatinsäure in Dimethoxyethan) werden kontinuierlich 585 g eines α,ω-Dihydrogenpolydimethylsiloxans mit 0,22 Gew.-% Si-gebundenem Wasserstoff zudosiert, so dass die Reaktionstemperatur 90 bis 110°C beträgt. Die Dosierdauer beträgt 1,5 Stunden. Die Reaktionsmischung wird eine weitere Stunde auf 105°C gehalten und anschließend auf Raumtemperatur abgekühlt. Als Maß für den Reaktionsfortschritt wird die Wasserstoffzahl bestimmt. Die Wasserstoffzahl beträgt 55 (Sollwert < 10), so dass erneut 2,0 ml der Katalysator-Lösung (1,25%ige Lösung von Hexachloroplatinsäure in Dimethoxyethan) zugegeben werden und die Reaktionsmischung weitere 1,5 Stunden auf 105°C erwärmt wird. Die Wasserstoffzahl der braunen Reaktionslösung beträgt 8 und der Wasser-Gehalt 1285 ppm. Am Rotationsverdampfer werden bei 112°C/0,5 Stunden/Vakuum < 1 mbar die Leichtsieder abdestilliert. Der Rückstand wird filtriert und man erhält ein Carbinolfunktionelles Silconöl mit folgenden Eigenschaften: Farbzahl Hazen (DIN ISO 6271): 54; Wasser-Gehalt: 794 ppm.

### B) Erfindungsgemäßes Beispiel

Vorhergehendes Beispiel wird wiederholt, indem aber zum Vergleich ein α,ω-Dihydrogenpolydimethylsiloxans eingesetzt wird, welches zuvor im Hochvakuum 1 Stunden bei 90°C ausgeheizt wurde. Ein zweite Zugabe der Platin-Katalysatorlösung ist nicht notwendig, da der erste Wert der Wasserstoffzahlmessung bei 9 liegt. Das resultierende Carbinolfunktionelle Siliconöl hat folgende Eigenschaften: Farbzahl Hazen (DIN ISO 6271): 6; Wasser-Gehalt: 390 ppm.

## Patentansprüche

1. Verfahren zur Hydrosilylierung von Kohlenstofr-Kohlenstoff-Doppel- bzw. Kohlenstoff-Kohlenstoff-Dreifachbindungen enthaltenden Verbindungen (A) mit Organosiliciumverbindungen mit an Silicium gebundenen Wasserstoff (B) mittels einer Verbindung oder eines Komplexes eines Edelmetalls der VIII. Nebengruppe als Katalysator (C), **dadurch gekennzeichnet, dass** die eingesetzte Ausgangs verbindungen und der Katalysator einer geeigneten Vorbehandlung unterzogen werden, so dass der Wassergehalt der Reaktionsmischung 0,05 bis 500 ppm beträgt und der Katalysator flüssig zur Reaktionsmischung zugegeben wird, mit der Maßgabe, dass die Edelmetallkonzentration maximal 25 ppm bezogen auf die gesamte Reaktionszusammensetzung beträgt.

2. Verfahren gemäß Anspruch 1, **dadurch gekennzeichnet, dass** die Edelmetallkonzentration 5 bis 25 ppm bezogen auf die gesamte Reaktionszusammensetzung beträgt.

3. Verfahren gemäß Anspruch 1 oder 2, **dadurch gekennzeichnet, dass** der Wassergehalt der Reaktionsmischung maximal 100 ppm beträgt.

4. Verfahren gemäß einem der Ansprüche 1 bis 3, **dadurch gekennzeichnet, dass** als Katalysator (C) Verbindungen oder Komplexe der Edelmetalle aus der Gruppe enthaltend Platin, Ruthenium, Iridium, Rhodium und Palladium verwendet werden.

5. Verfahren gemäß einem der Ansprüche 1 bis 4, **dadurch gekennzeichnet, dass** als Katalysator (C) Platin-Olefin-Komplexe oder Platin-Divinyltetramethyldisiloxankomplexe verwendet werden.

6. Verfahren gemäß einem der Ansprüche 1 bis 5, **dadurch gekennzeichnet, dass** das Verfahren bei einer Temperatur von 60 bis 140°C durchgeführt wird.

7. Verfahren gemäß einem der Ansprüche 1 bis 6, **dadurch gekennzeichnet, dass** das Verfahren bei einem Druck von 1 bis 20 bar durchgeführt wird.

8. Verfahren gemäß einem der Ansprüche 1 bis 7, **dadurch gekennzeichnet, dass** Organosiliciumverbindungen mit an Silicium gebundenen Wasserstoff (B) Verbindungen enthaltend Einheiten der allgemeinen Formel (II)
R²_{c}H_{d}SiO_{(4-c-d)/2} (II)
enthalten, worin
**R²** gleiche oder verschiedene einwertige Reste ausgewählt aus der Gruppe enthaltend -F, -Cl, -Br, -CN, -SCN,-, NCO, Alkoxyreste und SiC-gebundene, substituierte oder unsubstituierte Kohlenwasserstoffreste, die mit Sauerstoffatomen oder der Gruppe -C(O)- unterbrochen sein können,
**c** 0, 1, 2 oder 3 und
**d** 0, 1 oder 2
mit der Maßgabe bedeuten, dass die Summe von c + d ≤ 4 ist und mindestens ein Si-gebundenes Wasserstoffatom je Molekül vorliegt.

9. Verfahren gemäß einem der Ansprüche 1 bis 8, **dadurch gekennzeichnet, dass** Organosiliciumverbindungen mit an Silicium gebundenen Wasserstoff (B) Silane der allgemeinen Formel (III)
R³ₑH_{f}Si (III)
enthalten, worin
**R³** gleiche oder verschiedene einwertige Reste ausgewählt aus der Gruppe enthaltend -F, -Cl, -Br, -CN, -SCN,-NCO, Alkoxyreste und SiC-gebundene, substituierte oder unsubstituierte Kohlenwasserstoffreste, die mit Sauerstoffatomen oder der Gruppe -C(O)- unterbrochen sein können,
**e** 1, 2 oder 3 und
**f** 1, 2 oder 3
mit der Maßgabe bedeuten, dass die Summe von e + f = 4 ist.

10. Verfahren gemäß einem der Ansprüche 1 bis 9, **dadurch gekennzeichnet, dass** als Trocknungsmittel Siliciumtetrachlorid verwendet wird.

## Claims

1. Process for hydrosilylating compounds (A) containing carbon-carbon double bonds or carbon-carbon triple bonds with organosilicon compounds having silicon-bonded hydrogen (B) by means of a compound or of a complex of a noble metal of transition group VIII as a catalyst (C), **characterized in that** the starting compounds used and the catalyst are subjected to a suitable pretreatment such that the water content of the reaction mixture is 0.05 to 500 ppm and the catalyst is added in liquid form to the reaction mixture, with the proviso that the noble metal concentration is not more than 25 ppm based on the entire reaction composition.

2. Process according to Claim 1, **characterized in that** the noble metal concentration is 5 to 25 ppm based on the entire reaction composition.

3. Process according to Claim 1 or 2, **characterized in that** the water content of the reaction mixture is not more than 100 ppm.

4. Process according to any one of Claims 1 to 3, **characterized in that** the catalyst (C) used comprises compounds or complexes of the noble metals from the group comprising platinum, ruthenium, iridium, rhodium and palladium.

5. Process according to any one of Claims 1 to 4, **characterized in that** the catalyst (C) used comprises platinum-olefin complexes or platinum-divinyltetramethyldisiloxane complexes.

6. Process according to any one of Claims 1 to 5, **characterized in that** the process is carried out at a temperature of 60 to 140°C.

7. Process according to any one of Claims 1 to 6, **characterized in that** the process is carried out at a pressure of 1 to 20 bar.

8. Process according to any one of Claims 1 to 7, **characterized in that** organosilicon compounds with silicon-bonded hydrogen (B) comprise compounds containing units of the general formula (II)
R²_{c}H_{d}SiO_{(4-c-d)/2} (II)
where
**R²** are identical or different monovalent radicals selected from the group comprising -F, -Cl, -Br, -CN, -SCN, -NCO, alkoxy radicals and SiC-bonded, substituted or unsubstituted hydrocarbon radicals which may be interrupted by oxygen atoms or the -C(O)- group,
**c** is 0, 1, 2 or 3 and
**d** is 0, 1 or 2,
with the proviso that the sum of c + d ≤ 4 and at least one Si-bonded hydrogen atom per molecule is present.

9. Process according to any one of Claims 1 to 8, **characterized in that** organosilicon compounds having silicon-bonded hydrogen (B) comprise silanes of the general formula (III)
R³ₑH_{f}Si (III)
where
**R³** are identical or different monovalent radicals selected from the group comprising -F, -Cl, -Br, -CN, -SCN, -NCO, alkoxy radicals and SiC-bonded, substituted or unsubstituted hydrocarbon radicals which may be interrupted by oxygen atoms or the -C(O)- group,
**e** is 1, 2 or 3 and
**f** is 1, 2 or 3,
with the proviso that the sum of e + f = 4.

10. Process according to any one of Claims 1 to 9, **characterized in that** the desiccant used is silicon tetrachloride.

## Revendications

1. Procédé pour l'hydrosilylation de composés (A) contenant des doubles liaisons carbone-carbone ou des triples liaisons carbone-carbone, avec des composés organosiliciés (B) comportant de l'hydrogène lié au silicium, au moyen d'un composé ou d'un complexe d'un métal noble du groupe VIIIB en tant que catalyseur (C), **caractérisé en ce que** les composés de départ utilisés et le catalyseur sont soumis à un prétraitement approprié, de sorte que la teneur en eau du mélange réactionnel vaut de 0,05 à 500 ppm et le catalyseur est ajouté à l'état liquide au mélange réactionnel, étant entendu que la concentration du métal noble est au maximum de 25 ppm, par rapport à la composition totale du mélange réactionnel.

2. Procédé selon la revendication 1, **caractérisé en ce que** la concentration du métal noble vaut de 5 à 25 ppm, par rapport à la composition totale du mélange réactionnel.

3. Procédé selon la revendication 1 ou 2, **caractérisé en ce que** la teneur en eau du mélange réactionnel est au maximum de 100 ppm.

4. Procédé selon l'une quelconque des revendications 1 à 3, **caractérisé en ce qu'**on utilise comme catalyseur (C) des composés ou des complexes des métaux nobles choisis dans le groupe contenant le platine, le ruthénium, l'iridium, le rhodium et le palladium.

5. Procédé selon l'une quelconque des revendications 1 à 4, **caractérisé en ce qu'**on utilise comme catalyseur (C) des complexes platine-oléfine ou des complexes platine-divinyltétraméthyl-disiloxane.

6. Procédé selon l'une quelconque des revendications 1 à 5, **caractérisé en ce que** le procédé est effectué à une température de 60 à 140 °C.

7. Procédé selon l'une quelconque des revendications 1 à 6, **caractérisé en ce que** le procédé est effectué sous une pression de 1 à 20 bars.

8. Procédé selon l'une quelconque des revendications 1 à 7, **caractérisé en ce que** les composés organosiliciés (B) comportant de l'hydrogène lié au silicium comprennent des composés comportant des motifs de formule générale (II)
R²_{c}H_{d}SiO_{(4-c-d)/2} (II)
dans laquelle
**R²** représente des radicaux monovalents, identiques ou différents, choisis dans l'ensemble contenant -F, -Cl, -Br, -CN, -SCN, -NCO, des radicaux alcoxy et des radicaux hydrocarbonés substitués ou non substitués, liés par une liaison SiC, qui peuvent être interrompus par des atomes d'oxygène ou par le groupe -C(O)-,
**c** est 0, 1, 2 ou 3, et
**d** est 0, 1 ou 2,
étant entendu que la somme de c + d est ≤ 4 et qu'au moins un atome d'hydrogène lié à Si est présent par molécule.

9. Procédé selon l'une quelconque des revendications 1 à 8, **caractérisé en ce que** les composés organosiliciés (B) comportant de l'hydrogène lié au silicium comprennent des silanes de formule générale (III)
R³ₑH_{f}Si (III)
dans laquelle
**R³** représente des radicaux monovalents, identiques ou différents, choisis dans l'ensemble contenant -F, -Cl, -Br, -CN, -SCN, -NCO, des radicaux alcoxy et des radicaux hydrocarbonés substitués ou non substitués, liés par une liaison SiC, qui peuvent être interrompus par des atomes d'oxygène ou par le groupe -C(O)-,
**e** est 1, 2 ou 3, et
**f** est 1, 2 ou 3,
étant entendu que la somme de e + f est égale à 4.

10. Procédé selon l'une quelconque des revendications 1 à 9, **caractérisé en ce qu'**on utilise comme desséchant du tétrachlorure de silicium.
